# EUROPÄISCHE PATENTSCHRIFT

(11) **EP 1 506 806 B1**
(45) Veröffentlichungstag und Bekanntmachung des Hinweises auf die Patenterteilung: **06.08.2008**
(21) Anmeldenummer: 04012317.6
(22) Anmeldetag: 25.05.2004
(51) Int. Cl.: B01D 53/14, C10K 1/16

(54) **Verfahren und Anlage zur Aufbereitung von Waschlösungen aus der Gaswäsche**
Process and plant for regeneration of gas washing liquids
Procédé et appareil pour nettoyer un liquide de lavage d'un gaz

(30) Priorität: 09.08.2003 DE 10336677
(43) Veröffentlichungstag der Anmeldung: 16.02.2005
(73) Patentinhaber: Lurgi AG, 60295 Frankfurt am Main (DE)
(72) Erfinder: Meyer, Manfred, 61381 Friedrichsdorf (DE); Wagner, Ulrich Dr., 06408 Biendorf (DE); Kammerer, Hans, 60437 Frankfurt am Main (DE)
(74) Vertreter: Meyer-Dulheuer, Karl-Hermann

(56) Entgegenhaltungen:
- EP-A- 0 651 042
- DE-A- 19 716 310
- US-A- 4 102 784
- US-A- 4 142 875

## Beschreibung

Die Anmeldung betrifft ein Verfahren und eine Vorrichtung zur Entfernung von kolloidalen Metallsulfiden aus einer bei der Reinigung von Industriegasen mit Methanol bei tiefen Temperaturen anfallenden Waschlösung.

Es ist bekannt, dass bei der Herstellung von Industriegasen wie Synthesegas aus schwermetallhaltigen Brennstoffen Metallcarbonyle entstehen, die den Einsatz von Synthesegas bei einer Vielzahl von chemischen Synthesen beeinträchtigen. Synthesegas besteht im Wesentlichen aus Wasserstoff, Kohlenwasserstoffen, Kohlendioxid und Kohlenmonoxyd zusammen mit den aus den eingesetzten Rohstoffen stammenden Nebenprodukten wie insbesondere H₂S, HCN, COS, HSCN, aber auch Metallcarbonylen. Aus diesen Metallcarbonylen entstehen in Gegenwart von H₂S kolloidale Metallsulfide, die auf allen ihnen zugänglichen Oberflächen anbacken, was in kurzer Zeit zu Verlegungen u.a. auf den Böden der Trennkolonne und somit zum Fluten der Kolonne führt.

Zur Reinigung des Synthesegases sind eine Reihe von Verfahren entwickelt worden, unter denen das Rectisol-Verfahren die größte Bedeutung erlangt hat. In einer Rectisol-Anlage wird das Rohgas zunächst zur HCN-Entfernung mit einer kleinen Teilmenge der regenerierten Waschflüssigkeit, hier Methanol, vorgewaschen. Anschließend wird das Rohgas mit der Hauptmenge des regenerierten Methanols gewaschen, um H₂S zu absorbieren. Sowohl das beladene Vorwaschmethanol als auch das beladene Hauptwaschmethanol enthalten die genannten Metallcarbonyle.

Ein Verfahren zum Reinigen von Industriegasen durch eine ein- oder mehrstufige Tieftemperaturgaswäsche bei -60 bis 0°C mit Methanol und anschließendes Ausgasen des Methanols durch Entspannen, Evakuieren, Austreiben und Erhitzen mit zusätzlicher Behandlung in einem Vorreaktor ist in der deutschen Patentschrift 26 10 982 näher beschrieben. Mit diesem Verfahren sollen Ablagerungen von unlöslichen Schwermetallverbindungen, insbesondere von aus den Metallcarbonylen entstehenden Metallsulfiden, in den Ausgasungskolonnen von Gaswäschen verhindert und die Betriebszeiten verlängert werden. Allerdings gelangen auch bei Anwendung dieses Verfahrens nicht im Vorreaktor umgewandelte Metallcarbonyle, im Vorwaschmethanol gelöste Carbonyle sowie im Vorreaktor ausgegaste Metallcarbonyle immer noch zum Teil in das für weitere chemische Reaktionen vorgesehene Synthesegas.

Ein weiteres Verfahren zur Entfernung von Metallcarbonylverbindungen im Rahmen des Reinigens von Synthesegasen durch Tieftemperaturgaswäsche ist aus der deutschen Offenlegungsschrift 43 36 790 bekannt. Bei diesem Verfahren wird vor Eintritt in eine Regenerierkolonne ein stark beladener und ein schwach beladener Teilstrom mit Waschflüssigkeit erhitzt und je einem Reaktor zugeführt. Der schwach beladene Teilstrom der Waschflüssigkeit wird dann gemeinsam mit dem Kondensat, das bei der Teilkondensation der Dämpfe aus dem Kondensationssystem der Regenerierkolonne anfällt, jeweils einem separaten Verweilzeitreaktor zugeführt. Auch dieses Verfahren erlaubt jedoch keine vollständige Umsetzung der Metallcarbonyle sowie Abtrennung der Sulfide.

Die DE 19716310 offenbart ein Verfahren zur Niedrigtemperaturgaswäsche, in dem das methanolhaltige Waschwasser im Kreislauf über eine Metallsulfidfällung geführt wird.

Die Entfernung der aus den Metallcarbonylen, d.h. vor allem aus dem Eisenpentacarbonyl und dem Nickeltetracarbonyl entstehenden kolloidalen Metallsulfiden ist deshalb bei der Rectisolgaswäsche ein dringliches Problem, um ihre Ablagerungen in der Trennkolonne und anderen Anlagenteilen zu verhindern. Für die meisten der gefährdeten Anlagenteile sind inzwischen schon Lösungen erarbeitet worden, die die Säuberungsintervalle während der planmäßigen Stillstände ermöglichen. Die Lösungen zur Beherrschung von Ablagerungen von kolloidalen Metallsulfiden auf den Böden der Methanol-Wasser-Kolonne (MWC) sind bislang noch unbefriedigend.

Es stellte sich deshalb die Aufgabe, die kolloidalen Metallsulfide entweder zu beseitigen oder in eine Form zu überführen, die nicht mehr zu Anbackungen in den verschiedenen Geräteteilen und den Kolonnenböden führt.

Erfindungsgemäß wird diese Aufgabe durch ein Verfahren zum Entfernen von kolloidalen Metallsulfiden aus einer bei der Reinigung von Industriegasen mit Methanol bei tiefen Temperaturen anfallenden Waschlösung gemäß Anspruch 1 gelöst, bei dem die Waschlösung vor Eintritt in eine Trennkolonne in einen Fällungsbehälter geleitet wird, in dem die aus den Metallcarbonylen gebildeten kolloidalen Metallsulfide durch Erhitzen zu größeren Partikeln agglomerieren, die anschließend zusammen mit dem Sumpfprodukt aus der Trennkolonne ausgeschieden werden.

In einem derartigen Fällungsbehälter werden die Prozessbedingungen desjenigen Kolonnenabschnittes nachgestellt, der erfahrungsgemäß am stärksten verschmutzt. Dazu kann der methanolhaltigen Waschlösung Wasser zugemischt werden, um eine definierte Methanolkonzentration einzustellen. Dieses Wasser ist entweder ein Teil des Kolonnen-Sumpfproduktes oder auch das Kreislaufwasser aus einer Wasserwäsche für methanolhaltiges Rectisol-Abgas. Vor allem aber ist in dem erfindungsgemäßen Verfahren vorgesehen, durch Zugabe von Niederdruckdampf, das die kolloidalen Metallsulfide enthaltende Methanol-Wassergemisch bis zum Siedepunkt zu erwärmen. Die Dampfzugabe sorgt für die Bildung von größeren Metallsulfid-Agglomeraten und für eine gute Vermischung der Waschlösung mit dem zugeleiteten Wasser. Die Vermischung kann auch noch weiter durch die Zuleitung eines Inertgases wie Stickstoff oder Kohlendioxyd verstärkt werden.

Bei der erfindungsgemäß in dem Fällungsbehälter stattfindenden Metallsulfid-Agglomeration kann die kontinuierlich einfließende Waschlösung 2 entweder mit dem Wasser eines Teils des Kolonnensumpfproduktes 3 oder mit dem Kreislaufwasser aus einer Wasserwäsche für methanolhaltiges Rectisol-Abgas gemischt werden. Die durch die Erwärmung und den Wasserzusatz im Fällungsbehälter agglomerierten Metallsulfide haben keine anbackenden Eigenschaften mehr und werden zusammen mit der aus dem Fällungsbehälter entnommenen wässrigen Lösung kontinuierlich in den unteren Teil der Trennkolonne 6 eingespeist, von der aus sie die Anlage über das Sumpfprodukt der Trennkolonne 6 verlassen.

Um eine möglichst weitgehende Abtrennung des Methanols im Fällungsbehälter 1 zu erreichen, wird die Waschlösung dort bis zum Siedepunkt des Methanols erhitzt. Diese Erhitzung wirkt ebenso wie die kontinuierliche Senkung der Methanolkonzentration durch Wasserzuführung und Abdestillation des Methanols förderlich auf die Ausfällung und Agglomeration der Sulfide. Die Abscheidung der agglomerierten Metallsulfide kann auch noch dadurch gefördert werden, dass der Waschlösung Sulfidpartikel als Kristallisationskeime zugesetzt werden.

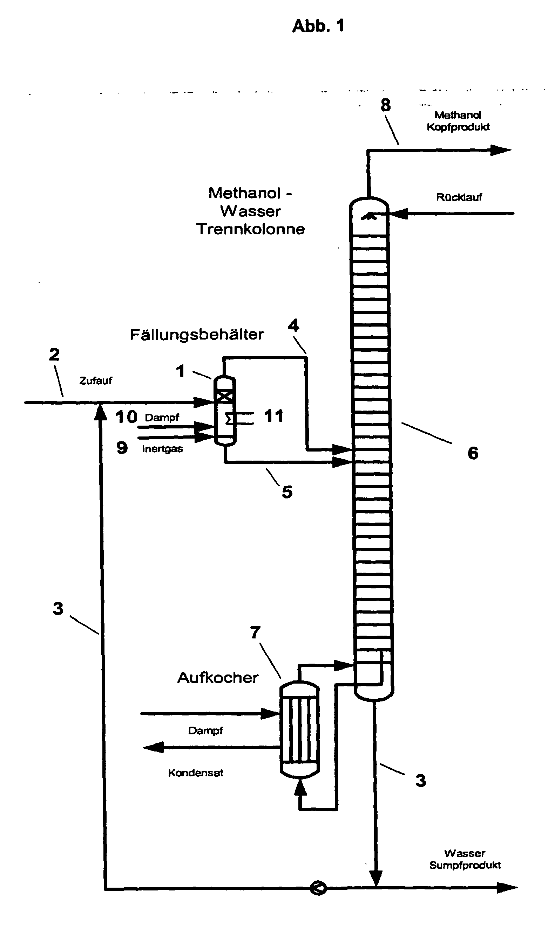

Durch die beiliegende Abbildung wird der erfindungsgemäße Fällungsbehälter und sein Einsatz bei der Abscheidung der kolloidalen Metallsulfide aus der Waschlösung verdeutlicht:
In den Fällungsbehälter 1 wird die beim Waschen von Industriegasen anfallende Lösung 2 eingeleitet und durch Hinzufügen des Wassers aus dem Kolonnensumpfprodukt 3 verdünnt. Die Mischung wird im Fällungsbehälter 1 durch Einleiten von Dampf 10 oder indirektes Erhitzen 11 erwärmt. Gleichzeitig kann durch Zuleiten von Inertgas wie Stickstoff oder Kohlendioxyd eine intensive Verwirbelung stattfinden.

Im Fällungsbehälter erfolgt die Ausfällung und Agglomeration der Sulfide sowohl durch die Anhebung der Temperatur auf den Siedepunkt des Methanol-Wasser-Gemisches als auch durch eine Verminderung der Methanol-Konzentration durch kontinuierliches Abdampfen des Methanols einerseits und Verringerung der Methanol-Konzentration im Kolonnenzulauf durch ständige Wasserzumischung andererseits.

Der im Fällungsbehälter 1 entstehende Methanoldampf wird über die Leitung 4 der Methanol-Wasser-Trennkolonne 6 zugeleitet, während das wasserhaltige Sumpfprodukt mit den agglomerierten Metallsulfiden über die Leitung 5 der Trennkolonne 6 zugeführt wird.

In der Trennkolonne 6 wird das Lösungsmittelgemisch durch den Aufkocher 7 erhitzt und das Methanol als Kopfprodukt über die Leitung 8 abgetrennt, während das Wasser mit den agglomerierten Metallsulfiden als Sumpfprodukt über die Leitung 3 die Kolonne 6 unten verlässt.

In der Praxis liegt der Zulauf zu der Methanol-Wasser-Kolonne 6, je nach Anlagengröße zwischen 0,5 und 5 m³/h. Ein üblicher Mengenstrom ist 2 m³/h.

Eine ungereinigte Rectisol-Waschlösung enthält, abhängig von der Carbonylkonzentration im Rohgas, im allgemeinen im Zulauf der Methanol-Wasser-Trennkolonne 6 einen Feststoffanteil von 50 bis 500 mg/l an FeS und NiS in kolloidaler Lösung.

Bei einer angenommenen Zulaufmenge von 2 m³/h und einer Sulfidkonzentration von 200 mg/l gelangen somit 0,4 kg/h Metallsulfide in die Methanol-Wasser-Trennkolonne 6. Auch wenn nur 20% davon als Verlegung in der Kolonne bleiben würden, heißt das, dass die Austauschböden pro Tag bei 24 stündiger Betriebsdauer mit 1,9 kg Feststoff belegt würden.

In dem erfindungsgemäß vorgeschalteten Fällungsbehälter 1 wird der Anteil der anbackenden Metallsulfide in der Kolonne auf nahezu 0 reduziert. D.h., die Verlegung der Kolonnenböden kann jetzt nur noch durch das Absetzen von schon zuvor agglomerierten, nicht mehr backenden Partikeln in Strömungstoträumen erfolgen, sowie durch die im Rücklaufmethanol zum Kolonnenkopf in geringer Konzentration vorhandenen kolloidalen Metallsulfide.

Insgesamt werden durch die beschriebenen Maßnahmen die Zeitabstände für die notwendigen Reinigungsintervalle der Kolonnenböden über die üblichen Reparaturintervalle der Gesamtanlage hinaus ausgedehnt und können dann bei den ohnehin routinemäßig erfolgenden Wartungen der Anlage mit beseitigt werden.

Mit dem erfindungsgemäßen Verfahren gelingt es durch Einbau des beschriebenen Fällungsbehälters in eine Anlage zur Reinigung von Rectisol-Waschlösungen die Metallcarbonyle nach Ausfällung zu FeS und NiS und Agglomerierung der zunächst kolloidalen Metallsulfide, die an den Kolonnenböden anbacken, in agglomerierte Metallsulfide umzuwandeln, die keine Tendenz mehr haben, sich an den Metallböden festzusetzen. Damit werden die bisher üblichen häufigen Abschaltungen der Anlage zur Reinigung der Rectisol-Waschlösung wegen starker Verunreinigung der Trennkolonne vermieden und damit die Wirtschaftlichkeit des Aufarbeitungsverfahrens der Methanol-Wasser-Lösungen der Rectisol-Anlage entscheidend erhöht.

### Bezugszeichenliste:

- 1: Fällungsbehälter
- 2: Zulauf der Waschlösung
- 3: Zuleitung von Wasser aus Kolonnen-Sumpfprodukt
- 4: Methanolzuleitung zur Trennkolonne
- 5: Ableitung von Wasser aus Fällungsbehälter-Sumpfprodukt
- 6: Methanol-Wasser-Trennkolonne
- 7: Aufkocher
- 8: Methanol-Destillat aus Trennkolonne
- 9: Zuleitung von Inertgas
- 10: Dampfzuleitung
- 11: Heizspirale

## Patentansprüche

1. Verfahren zur Entfernung von kolloidalen Metallsulfiden aus einer bei der Reinigung von Industriegasen mit Methanol bei Temperaturen von -60 bis 0°C anfallenden Waschlösung, wobei die Waschlösung in einen Fällungsbehälter (1) geleitet wird, in dem die aus Metallcarbonylen gebildeten kolloidalen Metallsulfide durch Erhitzen zu größeren Partikeln agglomerieren und anschließend zusammen mit dem Sumpfprodukt aus einer Methanol-Wasser-Trennkolonne (6) ausgeschieden werden, **dadurch gekennzeichnet, dass** das beim Erhitzen der kontinuierlich in den Fällungsbehälter (1) einlaufenden Waschlösung entweichende Methanol über Kopf abdestilliert und in den oberen Teil der nachgeschalteten Methanol-Wasser-Trennkolonne (6) eingeführt wird und die aus dem Fällungsbehälter (1) entnommene wasserhaltige Lösung zusammen mit den agglomerierten Metallsulfiden kontinuierlich in den unteren Teil der Methanol-Wasser-Trennkolonne (6) eingeführt wird.

2. Verfahren nach Anspruch 1, **dadurch gekennzeichnet, dass** die Waschlösung im Fällungsbehälter (1) bis zum Siedepunkt des Methanols erhitzt wird.

3. Verfahren nach den Ansprüchen 1 und 2, **dadurch gekennzeichnet, dass** der in den Fällungsbehälter (1) einlaufenden Waschlösung kontinuierlich Wasser zur Senkung der Methanolkonzentration und Verbesserung der Agglomeration der Metallsulfide zugesetzt wird.

4. Verfahren nach den Ansprüchen 1 bis 3, **dadurch gekennzeichnet, dass** der Waschlösung Sulfidpartikel als Kristallisationskeime zugesetzt werden.

5. Vorrichtung zur Durchführung eines Verfahrens nach einem der Ansprüche 1 bis 4, **dadurch gekennzeichnet, dass** sie einen Fällungsbehälter (1) enthält, der mit einem Zulauf (2) für die beim Waschen von Industriegasen anfallende Lösung verbunden ist, wobei der Zulauf (2) mit einer zusätzlichen Zuleitung (3) für einen Teil des Kolonnen Sumpfproduktes verbunden ist und der Fällungsbehälter (1) Mittel (10, 11) zur Erhitzung der Waschlösung aufweist, der im Fällungsbehälter (1) entstehende Methanoldampf über eine erste Leitung (4) mit dem Oberen Teil und das wasserhaltige Sumpfprodukt über eine zweite Leitung (5) mit dem unteren Teil einer Methanol-Wasser-Trennkolonne (6) verbunden ist, die zur Erhitzung des Lösungsmittelgemisches mit einem Aufkocher (7), zur Abtrennung des Methanols als Kopfprodukt mit einer Leitung (8) und einem Rücklauf sowie mit einer Ableitung für das Sumpfprodukt (3) ausgerüstet ist.

6. Vorrichtung nach Anspruch 5, **dadurch gekennzeichnet, dass** eine Einleitung von Dampf (10) zur Erhitzung der Waschlösung auf ihre Siedetemperatur vorgesehen ist.

7. Vorrichtung nach Anspruch 5, **dadurch gekennzeichnet, dass** eine Vorrichtung zur Erhitzung des Fällungsbehälters durch Erwärmung mit einer Heizspirale (11) vorgesehen ist.

8. Vorrichtung nach den Ansprüchen 5 bis 7, **dadurch gekennzeichnet, dass** Einlassventile zum Einblasen von Inertgas vorgesehen sind.

9. Vorrichtung nach den Ansprüchen 5 bis 8, **dadurch gekennzeichnet, dass** eine Öffnung für die Zugabe von Sulfidpartikeln als Kristallisationskeime vorgesehen ist.

## Claims

1. A process for removing colloidal metal sulfides from a wash solution resulting from the cleaning of industrial gases with methanol at temperatures from - 60 to 0 °C, wherein the wash solution is passed into a precipitation tank (1) in which the colloidal metal sulfides formed from metal carbonyls agglomerate to larger particles by heating and are subsequently eliminated together with the bottom product from a methanol-water rectifying column (6), **characterized in that** the methanol escaping during heating of the wash solution that is continuously flowing into the precipitation tank (1) is distilled off via the top and introduced into the top part of the downstream methanol-water rectifying column (6), and the aqueous solution removed from the precipitation tank (1), together with the agglomerated metal sulfides, is introduced continuously into the bottom part of the methanol-water rectifying column (6).

2. A process according to claim 1, **characterized in that** the wash solution is heated to the boiling point of methanol in the precipitation tank (1).

3. A process according to claims 1 and 2, **characterized in that** water is continuously added to the wash solution flowing into the precipitation tank (1) in order to reduce the methanol concentration and improve the agglomeration of the metal sulfides.

4. A process according to claims 1 to 3, **characterized in that** sulfide particles are added to the wash solution as seed crystals.

5. A device for performing a process according to any one of claims 1 to 4, **characterized in that** it contains a precipitation tank (1) that is connected to a feed inlet (2) for the solution resulting from washing industrial gases, wherein the feed inlet (2) is connected to a feed pipe (3) for water from the bottom of the column and the wash solution can be heated in the precipitation tank (1), the methanol vapor formed in the precipitation tank (1) and the aqueous bottom product is connected to a methanol-water rectifying column (6) via conduit (4) and conduit (5), respectively, the methanol-water rectifying column (6) being equipped with a reboiler (7) for heating the solvent mixture and a conduit (8) for separating the methanol as top product.

6. A device according to claim 5, **characterized in that** a means for introducing steam (10) for heating the wash solution to its boiling point is provided.

7. A device according to claims 5, **characterized in that** a device for heating the precipitation tank by means of heating with a heating coil (11) is provided.

8. A device according to claims 5 to 7, **characterized in that** inlet valves for blowing in inert gas are provided.

9. A device according to claims 5 to 8, **characterized in that** an opening for adding sulfide particles as crystal seeds is provided.

## Revendications

1. Procédé permettant d'éliminer des sulfures métalliques colloïdaux d'une solution de lavage obtenue lors de l'épuration de gaz industriels avec du méthanol et à des températures comprises entre -60 et 0 °C, ladite solution de lavage étant introduite dans un récipient de précipitation (1) dans lequel les sulfures métalliques colloïdaux formés à partir de carbonyles métalliques s'agglomèrent en augmentant la taille des particules, pour ensuite être éliminés avec le produit de pied de colonne d'une colonne de séparation méthanol/eau (6), **caractérisé en ce que** le méthanol qui s'échappe lorsqu'on chauffe la solution de lavage, qui est introduite dans le récipient de précipitation (1) de façon continue, est récupéré en tête par distillation pour l'introduire dans la partie supérieure de la colonne de séparation méthanol/eau (6) installée en aval et que la solution aqueuse qui est récupérée dans le récipient de précipitation (1) est introduite, de façon continue et ensemble avec les sulfures métalliques agglomérés, dans la partie inférieure de la colonne de séparation méthanol/eau (6).

2. Procédé selon la revendication 1, **caractérisé en ce que** la solution de lavage est chauffée dans le récipient de précipitation (1) jusqu'à ce que le point d'ébullition du méthanol soit atteint.

3. Procédé selon les revendications 1 et 2, **caractérisé en ce que** de l'eau est ajoutée de façon continue à la solution de lavage lors de son introduction dans le récipient de précipitation (1) pour ainsi diminuer la concentration de méthanol et améliorer l'agglomération des sulfures métalliques.

4. Procédé selon les revendications 1 à 3, **caractérisé en ce que** des particules de sulfure sont ajoutées à la solution de lavage en tant que germes cristallins.

5. Dispositif permettant de réaliser un procédé selon l'une des revendications 1 à 4, **caractérisé en ce qu'**il contient un récipient de précipitation (1) qui est relié à une ligne d'acheminement (2) pour la solution issue du lavage de gaz industriels, ladite ligne d'acheminement (2) étant relié à une ligne d'introduction (3) pour l'eau issue du pied de colonne, et que la solution de lavage peut être chauffée dans le récipient de précipitation (1), la vapeur de méthanol générée dans le récipient de précipitation (1) étant reliée à travers la ligne (4) avec la colonne de séparation méthanol/eau (6) alors que le produit aqueux de pied de colonne y est relié à travers la ligne (5), ladite colonne étant équipée d'un rebouilleur (7) pour chauffer le mélange de solvants et d'une ligne (8) permettant d'éliminer le méthanol en tête.

6. Dispositif selon la revendication 5, **caractérisé en ce qu'**il est pourvu d'un dispositif d'introduction de vapeur (10) destiné à chauffer la solution de lavage jusqu'à ce qu'elle atteigne sa température d'ébullition.

7. Dispositif selon la revendication 5, **caractérisé en ce qu'**il est pourvu d'un dispositif permettant de chauffer le récipient de précipitation au moyen d'un élément chauffant en forme de spirale (11).

8. Dispositif selon les revendications 5 à 7, **caractérisé en ce qu'**il est pourvu de vannes d'entrée permettant d'introduire un gaz inerte.

9. Dispositif selon les revendications 5 à 8, **caractérisé en ce qu'**il est pourvu d'une entrée permettant l'ajout de particules de sulfure en tant que germes cristallins.
